(19) **Europäisches Patentamt European Patent Office Office européen des brevets**

(11) **EP 1 556 912 B1**

(12) **EUROPEAN PATENT SPECIFICATION**

(45) Date of publication and mention of the grant of the patent:
**23.12.2015 Bulletin 2015/52**

(51) Int Cl.:
*H01M 2/16* *(2006.01)*   *H01M 2/14* *(2006.01)*

(21) Application number: **03781406.8**

(86) International application number:
**PCT/US2003/034037**

(22) Date of filing: **24.10.2003**

(87) International publication number:
**WO 2004/038830 (06.05.2004 Gazette 2004/19)**

(54) **SEPARATOR FOR ELECTROCHEMICAL DEVICES**

TRENNGLIED FÜR ELEKTROCHEMISCHE EINRICHTUNGEN

SEPARATEUR POUR DISPOSITIFS ELECTROCHIMIQUES

(84) Designated Contracting States:
**AT BE BG CH CY CZ DE DK EE ES FI FR GB GR HU IE IT LI LU MC NL PT RO SE SI SK TR**

(30) Priority: **25.10.2002 US 281050**

(43) Date of publication of application:
**27.07.2005 Bulletin 2005/30**

(73) Proprietor: **W.L. Gore & Associates, Inc.**
**Newark DE 19714 (US)**

(72) Inventors:
• **ZUCKERBROD, David**
**Baltimore, MD 21209 (US)**

• **LIU, Wen**
**Newark, DE 19711 (US)**

(74) Representative: **Wilson, Gary et al**
**HGF Limited**
**Delta House**
**50 West Nile Street**
**Glasgow G1 2NP (GB)**

(56) References cited:
**WO-A-99/16138      WO-A1-99/16138**
**JP-A- 8 250 101      JP-A- 11 051 192**
**US-A- 5 597 658      US-A- 5 814 405**
**US-A- 5 814 405      US-B1- 6 242 135**
**US-B1- 6 242 135**

**Description**

**FIELD OF THE INVENTION**

This invention relates to electrochemical devices, and in particular, to a separator for wound electrochemical devices such as supercapacitors and batteries.

**BACKGROUND OF THE INVENTION**

Electrochemical devices are widely used for energy storage in diverse consumer, industrial, space and other applications. Typical devices include electrochemical cells such as capacitors, supercapacitors (or ultracapacitors), primary and secondary (rechargeable) batteries, fuel cells, and the like. These devices, although having a wide variety of possible structures, typically comprise some common components. These include, for example, (i) one or more anode electrodes, (ii) one or more cathode electrodes, (iii) one or more separators disposed between the electrodes, (iv) one or more current collectors, (v) electrolyte, and (vi) packaging. The separator can comprise various materials including, for example, organic polymers, inorganic materials, and electrolytes.

An important practical aspect of electrochemical device technology is the methodology by which the cell components, including the separator and electrodes, are placed in the final assembled structure. Wound electrochemical devices, wherein the layers are wound in a generally circular or spiral configuration, are well known. An advantage of wound devices is that large surface area electrodes can be rolled into a small case, which provides high efficiency and energy density. Wound cells also offer production efficiencies compared to other cell architectures. The large electrodes in the wound design greatly reduce the internal resistance of the device. The number of individual parts needed to assemble the cell is much less than with a stacked-plate design. Cylindrical devices are also relatively easily sealed. Hence, many advantages exist for this wound design compared, for example, to a stacked-plate design.

Another important practical aspect of state-of-the-energy storage devices is the trend toward increased energy density and power density. This results in new device design challenges. In all energy storage devices, safety is the first priority. In the case of lithium ion cells, multiple levels of safety devices are required. External fuses and temperature sensors can react too slowly to assure safe shutdown of a cell in the case of a fault. Traditional microporous polypropylene battery separators begin to shrink above 120 C. This can result in massive internal short circuits followed by violent venting of the cell. Fires and explosions have been known to occur. Multi-layer "shutdown" separators have been developed to limit the thermal rise of cells during a fault condition such as overcharge, overdischarge, external or internal short circuits. When the temperature of the separator exceeds a certain threshold, the resistance of the separator increases by orders of magnitude, shutting down the cell reaction. This irreversible shutdown mechanism renders the battery useless. Use of this type of separator also limits the temperature which can be used during cell construction, such as drying, welding or lamination. If the temperature rises too much, the separator will shut down even before the cell is completed. One of the key aspects of this invention is to allow device designers more thermal resistance so that cells can safely survive higher peak temperatures during construction, normal operation and in a fault situation. Ultimately, this allows higher performance and safer operation of the cells.

Preparation of a wound electrochemical device requires severe mechanical stressing of the device components, which can directly damage the layers or result in undesirable assembly of device components. Wrinkling of device components is a particularly severe processing problem, which can result in device failure or even safety hazards. The mechanical stresses can include, for example, strong tension and compression of the different device layers during manufacture which are used to generate tight winding. Even after manufacture is complete, the device layers might still be under compaction or tensile stress in the final assembled tightly wound form.

The relationship between the type of separator and the ability to manufacture a useful electrochemical device therefrom can be difficult to determine. A separator might, for example, on initial evaluation appear to have attractive electrochemical properties, but on further investigation, have poor processing characteristics. Alternatively, the separator might process well but suffer from disadvantages like excessive thickness, lack of stability, leakage current and generally less than optimal performance. Combinations of properties are crucial for commercialization. Hence, improved separators are particularly needed which provide excellent processing and manufacturing in combination with desirable performance properties. For example, some common separator materials such as microporous polypropylene or microporous polyethylene in general can withstand high levels of back tension during winding but are generally undesirably resistive due to low porosity. Expanded polytetrafluoroethylene (PTFE) provides excellent performance in the electrochemical devices themselves, but has heretofore been unacceptably poor in processing. The expanded PTFE materials typically cannot withstand the high back tensions used in winding the devices. An expanded PTFE separator that combines excellent performance with excellent processability is particularly desirable.

US 6 242 135 B1 (Mushiake) describes a solid polymer electrolyte composite for an electrochemical reaction apparatus that possesses satisfactory ion conduction properties and has excellent mechanical strength and heat resistance. The solid polymer electrolyte composite is characterized in that a solid polymer electrolyte is contained in the continuous pores of an expanded porous polytetrafluoroethylene sheet which has continuous pores and in which the inner surfaces defining the pores are covered with a functional material such as a metal oxide. An electrochemical reaction apparatus containing an electrolyte, wherein said electrochemical reaction apparatus is characterized in that the aforementioned solid polymer electrolyte composite is used as this electrolyte is also provided.

WO 99/16138 A (W. L. Gore & Associates) describes an electrochemical energy storage means with at least two electrodes and an electrolyte, a carrier material for the electrolyte being disposed between the electrodes, and the carrier material including a porous material in whose inner pore structure a perfluorinated surface-active substance is present.

## SUMMARY OF THE INVENTION

According to the present invention there is provided a wound battery according to the appended claims.

Basic and novel features of the present invention are evident from the numerous advantages discussed throughout this specification and inherently present. These advantages include, for example, generally excellent performance stemming from the wrinkle-free character of the devices and layers therein, particularly the separator. In addition, fast and efficient production speeds can be achieved, cell failure is reduced, and dendritic growth is minimized without use of thick separator structures. Chemical and thermal stability is generally excellent. Still further advantages include excellent separator wettability, low membrane resistance, good reliability and safety, ability to withstand charging and discharging at high current densities, good chemical stability to different electrolytes, and ability to withstand high temperature environments which might arise in electrochemical use, during the construction of the cell, or during assembly of the electrical device which employs the cell. Even further, excellent combinations of these properties are provided which the prior art does not provide.

In one aspect, the present invention provides a separator for a wound electrochemical device comprising an expanded polytetrafluoroethylene membrane having pores defining an internal surface area, said internal surface area being substantially coated with a pore coating agent, said separator having a longitudinal modulus of greater than 138 x $10^3$ kPa (20,000 lbs/in$^2$). Preferably, the modulus is greater than 275 x $10^3$ kPa (40,000 lbs/in$^2$). More preferably, the modulus is about 600 x $10^3$ kPa (87,000 lbs/in$^2$). Most preferably, the modulus is about 1,448 x $10^3$kPa (210,000 lbs/in$^2$).

The pore coating agent is preferably silica sol-gel or perfluorinated polyether phosphate. The preferred separator has a bubble point of greater than 152 kPa (22 psi), and preferably about 220 kPa (32 psi), and a puncture strength of about 4.9 N or greater. The inventive separator is preferably used in a wound electrochemical device such as a battery.

In another aspect, the invention provides a wound battery comprising a first electrode, a second electrode, and a separator disposed between the first and second electrodes, the separator comprising:

(a) an expanded polytetrafluoroethylene membrane having pores defining an internal surface area and having a longitudinal modulus of about 1,448 x $10^3$ kPa (210,000 lbs/in$^2$), a bubble point of about 220 kPa (32 psi), and a puncture strength of about 4.9 N; and
(b) a silica sol-gel substantially coating said internal surface area.

## DETAILED DESCRIPTION OF THE INVENTION

The inventors have surprisingly found that a particular type of expanded PTFE can be wound and processed as a separator and has desirable properties for optimal electrochemical device performance.

This surprising expanded PTFE is one made according to the teaching of U. S. Patent No. 5,814, 405.

Typically, expanded PTFE does not process well when forming wound electrochemical devices. The inventors surprisingly found, however, that the expanded PTFE used in this invention is strong enough to be wound wrinkle- free into a wound electrochemical device. The expanded PTFE used in this invention has a longitudinal modulus greater than about 138 x $10^3$ kPa (20,000 pounds per inch$^2$), which is critical to being able to process the separator in a continuous manner to form wound electrochemical devices such as batteries. Preferably, the longitudinal modulus is about 600 x $10^3$ kPa (87,000 lbs/in$^2$), and more preferably, about 1,448 x $10^3$ (210, 000 lbs/in$^2$).

Another important property of the inventive separator is a puncture strength of about 4.9 N or greater. The high puncture strength of the preferred separator allows it to be compressed between electrodes consisting of bound particles without having holes formed in it. The high puncture strength is also indicative of high mechanical strength which is balanced in the longitudinal and transverse direction thus avoiding splitting in the weak direction when challenged by a protrusion from the electrode.

The bubble point of the inventive separator is at least 152 kPa (22 psi) and preferably about 220 kPa (32 psi). The bubble point is a measure of the maximum pore size of the membrane. Having a bubble point of at least 152 kPa (22 psi) ensures that the pores of the porous expanded PTFE are small enough to retain electrolyte when used in an electrochemical device and also to prevent intrusion of conductive particles from the electrodes into the separator.

Other properties of the expanded PTFE separator used in this invention include the following:

(1) A thickness of, for example, 1 to 500 microns, and preferably, 5 microns to 100 microns. Thickness can be measured by a snap gage such as a Mitutoyo Model No. 7326 with a range of 25 $\mu$m to 1.3mm (0.001 to 0.0500 inches). Thickness is generally measured before winding.

(2) A maximum average pore diameter of 0.01 to 10 microns. Maximum average pore diameter can be measured by the bubble point test mentioned above (and described in detail below).

(3) A porosity of 5 to 95% and preferably 35% to 95%. Porosity can be calculated by the following equation:

$$\text{Porosity} = (1 - \rho_m/\rho_t) \times 100\%$$

where $\rho_m$ is the measured density of the material and $\rho_t$ the theoretical density thereof.

The present invention, in its broadest terms, is applicable to a variety of different types of electrochemical devices, which can be prepared in a wound configuration. Winding processes to form spiral forms are described, for example, in Japanese Patent Publication Number 11-051192, published February 23, 1999.

In a preferred embodiment, the separator of this invention comprises a porous expanded PTFE matrix having pores and an internal surface area. The pores of the separator are generally designed for filling with and retaining of electrolyte. Before winding, the porous separator is in a generally planar or sheet configuration.

Preferably, more than one wound porous separator is present in the final electrochemical device. The number of separators can be, for example, two or multiples of two.

A single separator can comprise laminations of multiple layers. The total thickness of the separator is preferably 500 microns or less, and more preferably 100 microns or less, and even more preferably, 50 microns or less.

The separator should not allow for substantial electronic conduction which would impair its function to separate the electrodes and cause short circuiting. Rather, it should allow ionic conduction to occur with use of an electrolyte filling the pores. Hence, the separator should have sufficient hydrophilicity and porosity to allow wetting and wicking by electrolyte compositions. Open structure of the porous material also allows more space for the electrolyte which, in turn, minimizes ionic resistance.

Fillers and additives can be included in the bulk of the porous polymer matrix, and are preferably uniformly distributed therein. These fillers and additives are different from the pore coating agent (discussed below) which generally contacts the internal surface area of the matrix but is not generally present in the bulk of the porous polymer matrix. Fillers and additives can help improve the separator's performance.

For example, nano-scale ceramics can be included within the bulk of the porous polymer matrix. These include, for example, metal oxides such as aluminum oxide, zirconium oxide, silicon dioxide, titanium dioxide, zinc oxide, iron oxides, mixed oxides, ferrites, metallic salts such as sulfates, sulfites, sulfides, and phosphates. Naturally occurring materials, such as clays, kaolins, and the like, can be used. The particle size of the nano-scale ceramic powders is preferably two microns to 300 microns.

The porous polymer matrix, by itself, is generally prepared from relatively hydrophobic polymer(s) and is, therefore, hydrophobic and generally difficult to fill with more polar electrolytes. Accordingly, in a preferred embodiment at least one pore coating agent is used to coat the inner surface area of a ePTFE matrix. The pore coating agent also helps in retention of the electrolyte after filling. This agent generally functions as a wetting agent and allows the pores of the relatively hydrophobic matrix to be filled with relatively hydrophilic electrolyte. Therefore, the pore coating agent generally is a relatively hydrophilic material. It coats the internal surface area of the porous matrix without totally blocking the pores of the porous matrix. Hence, the separator remains porous. Substantially complete contacting with and coating of the internal surface area of the matrix is preferred. Mixtures of pore coating agents can be used. The pore coating agent is preferably stable at elevated temperatures such as at least 200°C, and preferably, at least 250°C. Despite exposure to these temperatures, the separator layer remains relatively hydrophilic. The weight percent of the pore coating agent in the separator is typically 0.5 to 20 %.

The pore coating agent can be prepared with use of one or more precursor compounds which are chemically converted to the electrolyte pore coating agent. The precursor compound can be incorporated into the porous polymer matrix and then, within the matrix, converted to the electrolyte pore coating agent. The precursor compound, for example, can be a liquid or partially gelled form, whereas the final pore coating agent, after conversion and drying, then can be a solid.

The electrolyte pore coating agent can be an inorganic oxide, and preferably, can be a metal oxide, and can be prepared with use of hydrolyzable sol-gel precursor compounds. Examples of inorganic oxides include oxides of most reactive elements other than carbon including, for example, lithium, beryllium, boron, magnesium, aluminum, silicon, phosphorous, sulfur, potassium, calcium, cesium, titanium, vanadium, chromium, manganese, iron, cobalt, nickel, copper, zinc, gallium, germanium, arsenic, selenium, rubidium, strontium, yttrium, zirconium, niobium, molybdenum, ruthenium, rhodium, palladium, cadmium, indium, tin, antimony, tellurium, barium, lanthanum, cerium, praseodymium, neodymium, promethium, samarium, europium, gadolinium, terbium, dysprosium, holmium, erbium, thulium, ytterbium, lutetium, thorium, protactinium, uranium, plutonium, hafnium, tantalum, tungsten, platinum, mercury, lead, and bismuth.

Specific examples of precursor compounds include metal alkoxide including tetramethoxytitanium, tetraethoxytitanium, tetra(iso)propoxytitanium, tetrabutoxytitanium, zirconium isopropylate, zirconium butyrate, tetramethoxysilane, tetraethoxysilane, tetra(iso)propoxysilane, and tetra-t-butoxysilane.

Specific examples of metal complexes include titanium tetraacetylacetonate, zirconium acetylacetonate, and other metal acetylacetonates.

Silicone alkoxide compounds such as tetraethoxysilane are particularly preferred to form the electrolyte pore coating agent comprising a silicon oxide such as silicon dioxide.

Before being contacted with the porous polymer matrix, the abovementioned metal oxide precursor is brought into contact with water and other solvents if desired and partially gelled to produce a solution-form gelation product. This gelation reaction encompasses hydrolysis and condensation reactions.

The partial gelation of the metal oxide precursor can be accomplished by adding the metal oxide precursor to water and then agitating and mixing. A water-miscible organic solvent such as, for example, methanol, ethanol, propanol, butanol, and other alcohols can be mixed into the water, and if needed, hydrochloric acid, sulfuric acid, nitric acid, acetic acid, hydrofluoric acid, or another acid, or sodium hydroxide, potassium hydroxide, ammonia, or another base can be added. The partial gelation of the metal oxide precursor can also be accomplished by adding water to an organic solvent solution of the metal oxide precursor and then agitating and mixing. The organic solvent used can be any one capable of dissolving the metal oxide precursor, and in addition to alcohols, aliphatic and aromatic hydrocarbons can also be used.

The gelation reaction is generally conducted at a temperature of 0°C to 100°C, and preferably, 60°C to 80°C.

The proportion in which the water is used is preferably 0. 1 to 100 mole, and preferably, 1 to 10 moles, per mole of metal oxide precursor. The gelation reaction should be conducted in a sealed system or under an inert gas flow, but can also proceed by means of the moisture present in air to promote gelation.

The metal oxide hydrous gel can be produced in the form of a film contacting and coating the inner surfaces of the pores after the gelation reaction has been completed, and a monolithically deposited metal oxide forms a uniform, relatively thin layer on the inner surfaces of the pores. The gel can be dried at 300°C and lower, and preferably, 200°C and lower. Despite the hydrophobic character of the porous polymer matrix, there should be excellent adhesion or interfacial contact between the matrix and the pore coating agent so that the pore coating agent is locked into the matrix.

After full conversion from the precursor, the separator is still a porous layer. The pore coating agent preferably has an average layer thickness of, for example, 0.01 microns to 0.2 microns, and preferably, 0.02 microns to 0.1 microns. After the pore coating agent is incorporated into the porous polymer matrix, the porosity of the treated matrix, which is also the separator layer, is preferably at least 35%, and more preferably at least 50%, of the porosity of the original untreated porous polymer matrix.

In an alternative embodiment particularly useful for batteries using an alkaline electrolyte, the pore coating agent can be a perfluorinated polyether phosphate, such as that disclosed in U. S. Patent Application No. 09/921,286.

Any known anode and cathode electrode can be used in contact with the separator and current collectors. The electrode should be compatible with the separator and current collectors and provide for good interfacial contact with low contact resistance. Electrodes can be adapted to the particular electrochemical device, but electrodes adapted for supercapacitors and batteries are particularly preferred. The electrodes can be porous and optionally filled with electrolyte as part of the assembly of a final article. Porous electrodes are preferred; calendered electrodes are preferred.

Other conventional electrochemical device components can also be used with this invention. For example, current collectors and electrically conductive electrode substrates can be made of electronic conductors including metals and metal foils including capacitor grade aluminum foil. The collector can be attached to the electrode with conductive adhesive and can help support the electrode. Contact resistance between the electrode and the current collector is preferably minimized. Other collectors include, for example, plates, foils, nets, perforated plates of metals including aluminum, copper, nickel, lead, stainless steel, tantalum, and titanium. Surfaces of collectors can be roughened by etching. The current collectors can be wound.

A wide variety of electrolytes can be used. For example, the electrolytes can be liquid, solid, solid polymer, gel, organic, inorganic, or aqueous. If liquid, the electrolyte should be able to wet the separator and the electrodes. If solid, the solid must be in a form such as a solution or dispersion which allows wetting of the separator or the electrode. Surfactants including fluorinated surfactants can be included in the electrolyte, if desired.

Winding can be carried out by known and conventional winding methods. After winding, and in a state before electrolyte is introduced, the wound porous separator. The wound roll should be tightly wound and compact with no, or substantially no, wrinkles in the roll of the electrodes and separator. Wrinkles during and after winding can be detected visually and with use of conventional magnification devices including lenses. The absence of wrinkles can also be evident from the excellent long term performance of the device, and by measuring the thickness (diameter) of the roll (wrinkles will increase the diameter). Wrinkles will also add undesirable singularities to the device, such as areas of high resistance or stress.

The reduced wrinkling can be achieved using the separator according to this invention because of the ability to carry out high tension winding with the separator. Specifically, high levels of back tension can be used in winding. This is quite surprising and unexpected, particularly with ePTFE as the separator material. Conventional ePTFE separators were incapable of withstanding high winding tension and producing a wrinkle-free roll.

After winding, the separator and electrochemical device according to this invention show excellent, low level shrinkage properties. For example, machine direction shrinkage is less about 8% or less, and preferably, less than 6%, after exposure to 250°C for 15 minutes. Cross-web direction shrinkage is about 7% or less, and preferably less than 2%, and most preferably about 1 %, under the same thermal conditions.

Another advantage of the electrochemical device is thermal stability. For example, the device is thermally stable to 400°C in air. Thermal stability is measured using thermal gravimetric analysis (TGA) using, for example, a Universal V2.5H TA Instrument.

The following testing procedures were employed on samples that were prepared in accordance with the teachings of the present invention.

1. TEST PROCEDURES

a. Transverse or Longitudinal Elongation

Testing was carried out on an Instron model number 5567 (Instron Corporation series IX-automated material testing system 1.00). Samples were 2.5cm (1 inch) in the longitudinal direction by 15cm (6 inches) in the transverse direction for transverse elongation. For longitudinal elongation, samples were 2.5cm (1 inch) in the transverse direction by 15cm (6 inches) in the longitudinal direction. Gauge length (distance between clamps) was 5.1cm (2 inches). Samples were pulled at a crosshead speed of 51 cm/minute (20 inches/minute), at 20C and 50% relative humidity. Elongation at break was recorded.

b. Bubble Point

Bubble Point was measured according to the procedures of ASTM F316-86. Isopropyl alcohol was used as the wetting fluid to fill the pores of the test specimen. The Bubble Point is the pressure of air required to displace the isopropyl alcohol from the largest pores of the test specimen and create the first continuous stream of bubbles detectable by their rise through a layer of isopropyl alcohol covering the porous media. This measurement provides an estimation of maximum pore size.

c. Transverse or Longitudinal Modulus

Testing was carried out on an Instron model number 5567 (Instron Corporation series IX-automated material testing system 1.00). Samples were 2.5cm (1 inch) in the longitudinal direction by 15cm (6 inches) in the transverse direction for transverse modulus. For longitudinal modulus, samples were 2.5cm (1 inch) in the transverse direction by 15cm (6 inches) in the longitudinal direction. Gauge length (distance between clamps) was 5.1cm (2 inches). Samples were pulled at a crosshead speed of 51 cm/minute (20 inches/minute), at 20C and 50% relative humidity. Max load at break was recorded. The modulus was calculated as follows:

Modulus=stress/strain

Stress=max load/area

Area=cross-sectional area=width*thickness Strain=change in length/initial gauge length

d. Puncture Strength

One layer of separator is secured in a clamp such that a circular area of 11 mm diameter is exposed and unsupported. The clamp is then installed in an Instron Series IX Automated Materials Test System. A rod 1 mm in diameter with a 0.5 mm radius hemispheric end is secured in the driven portion of the Instron. The rod is driven into the center of the circle of separator at a rate of 100 mm/minute. The force required to puncture the separator is recorded. The test is repeated five times and the average result is reported.

The invention is further illustrated with use of the following, non- limiting examples.

EXAMPLE 1

A separator was produced as follows. An expanded PTFE membrane was produced in accordance with the teachings of U.S. Pat. No. 5,814, 405. The membrane was treated with a sol-gel silica to render it hydrophilic by methods described in Japanese patent publication number 08-250,101, published September 27,1996. The membrane had the following properties before and after coating with the sol-gel silica pore coating agent:

| | |
|---|---|
| Longitudinal Elongation: | 48% (uncoated) |
| | 65% (coated) |
| Bubble Point: | 145 kPa (21 psi) (uncoated) |
| | 152 kPa (22 psi) (coated) |
| Longitudinal Modulus: | $594 \times 10^3$ kPa (86,000 lbs/in$^2$) (uncoated) |
| | $600 \times 10^3$ kPa (87,000 lbs/in$^2$) (coated) |
| Puncture strength | coated 6.8 N |

COMPARATIVE EXAMPLE 1

A sample of Prismatic™ expanded PTFE separator was obtained from W.L. Gore & Associates in a coated and uncoated form. The uncoated and coated membranes had the following properties:

| | |
|---|---|
| Longitudinal Elongation: | 59% (uncoated) |
| | 71 % (coated) |
| Bubble Point: | 131 kPa (19 psi) (uncoated) |
| | 152 kPa (22 psi) (coated) |
| Longitudinal Modulus: | 345 kPa (5,000 lbs/in$^2$) (uncoated) |
| | 897 kPa (13,000 lbs/in$^2$) (coated) |
| Puncture strength | 2 N |

Comparing the bubble point readings from Example 1 with those of Comparative Example 1, it is seen that they are approximately the same when the separator is coated. This indicates that the inventive sample of Example 1 has a pore size approximately the same as that of Comparative Example 1 and is thus able to keep particles from passing through the membrane in a suitable manner similar to that of the existing device represented by Comparative Example 1. In other words, electrochemical performance in a cell using the sample of Example 1 should be comparable to that of the known art represented by Comparative Example 1.

The longitudinal modulus data indicates a significant and surprising result. The material of Example 1 is much stronger than that of Comparative Example 1. As such, it is far superior in terms of processability. The inventive sample of Example 1 is adapted to be wound into a cell using high back tension, which it is strong enough to withstand without wrinkling or breaking. This results in considerable processing advantages.

EXAMPLE 2

A separator was produced as follows. An expanded PTFE membrane was produced in accordance with the teachings of U.S. Pat. No. 5,814,405. The membrane was treated with a sol-gel silica to render it hydrophilic by methods described in Japanese patent publication number 08-250,101, published September 27,1996. The membrane had the following properties before and after coating with the sol-gel silica pore coating agent:

| | | |
|---|---|---|
| Longitudinal Elongation: | Uncoated | 57% |
| | Coated | 38% |
| Bubble Point (psi) [kPa] | Uncoated | (28.3) [195] |
| | Coated | (32.2) [222] |
| Longitudinal Modulus (psi) [kPa] | Uncoated | (34,000) [$235 \times 10^3$] |

(continued)

|  | | |
|---|---|---|
| | Coated | (210,000) [1,448 x 10$^3$] |
| Puncture strength | Coated | 4.9 N |

COMPARATIVE EXAMPLE 2

A sample of Celgard™ 3501 microporous polypropylene battery separator was obtained from Daramic Inc. The membrane had the following properties:

| | |
|---|---|
| Longitudinal Modulus: | 725 x 10$^3$ kPa (105,000 psi) |
| Puncture strength | 3.3 N |

The sample of Comparative Example 2 was not sufficiently wide to obtain a transverse modulus measurement by the standard procedure. However, it was noted that the material stretched and split easily when manually pulled in the transverse direction. This can be seen when comparing the rather high longitudinal modulus to the rather low puncture strength. The imbalance between the longitudinal and transverse properties reduces the puncture strength compared to the inventive separator.

In addition to the mechanical properties, the Celgard separator lacks the thermal stability of the inventive separator. This polypropylene membrane shrinks markedly when heated. The shrinkage in the machine direction of Comparative Example 2 after 15 minutes at 150 C is 35%, compared to about 8 % for the inventive separator of Example 1 after 10 minutes at 250 C.

Those skilled in the art will recognize that a wide variety of other properties may be achieved in addition to those presented above. Applicants believe, however, that the properties reported above are the most critical properties for the surprising processability achievable with the present invention.

The examples and specific embodiments presented herein are intended to illustrate the invention. Rather, the scope of the present invention is embraced by the following claims.

**Claims**

1.   A wound battery comprising a first electrode, a second electrode and a separator disposed between said first and second electrodes; said separator comprising an expanded polytetrafluoroethylene membrane having pores defining an internal surface area; said internal surface area being coated with a silica sol-gel pore coating agent; said separator having: a longitudinal modulus of greater than 138x10$^3$kPa (20,000 lbs/in$^2$), a puncture strength of 4.9 N or greater and a bubble point of at least 152 kPa (22 psi); wherein the membrane has an internal microstructure consisting essentially of a series of nodes interconnected by fibrils, said nodes generally aligned in parallel, being highly elongated and having an aspect ratio of 25:1 or greater.

2.   A battery as defined in claim 1 wherein said modulus is greater than 275x10$^3$kPa (40,000 lbs/in$^2$).

3.   A battery as defined in claim 1 wherein said modulus is about 600x10$^3$kPa (87, 000 lbs/in$^2$).

4.   A battery as defined in claim 1 wherein said modulus is 1,448x10$^3$kPa (210, 000 lbs/in$^2$).

5.   A battery as defined in claim 1, the separator further comprising a bubble point of 220kPa (32psi).

6.   A battery as defined in claim 1 wherein said puncture strength of the separator is 6.8 N or greater.

7.   A battery as defined in claim 1 wherein expanded PTFE membrane further contains a filler.

8.   A battery as defined in claim 1 wherein said expanded polytetrafluoroethylene membrane has a longitudinal modulus of 1,448x10$^3$kPa (210,000 lbs/in$^2$), a bubble point of 220kPa (32 psi), and a puncture strength of about 4.9 N.

9.   A battery as defined in claim 8 further comprising a plurality of said separators.

**Patentansprüche**

1. Gewickelte Batterie, eine erste Elektrode, eine zweite Elektrode und einen zwischen der ersten und zweiten Elektrode angeordneten Separator umfassend; wobei der Separator eine gedehnte Polytetrafluorethylenmembran mit Poren, einen Innenflächenbereich definierend, umfasst; wobei der Innenflächenbereich mit einem Silikat-Sol-Gel-Porenbeschichter beschichtet wird; wobei der Separator Folgendes aufweist: ein Längsmodul von über 138x10$^3$ kPa (20.000 lb/in$^2$), eine Durchschlagfestigkeit von größer oder gleich 4,9 N und einen Blasenpunkt von mindestens 152 kPa (22 PSI); wobei die Membran eine innere Mikrostruktur umfasst, welche im Wesentlichen aus einer Reihe von durch Fibrillen miteinander verbundenen Knoten besteht, wobei die Knoten im Allgemeinen parallel ausgerichtet sind, hochgestreckt sind und ein Seitenverhältnis von größer oder gleich 25:1 aufweisen.

2. Batterie nach Anspruch 1, wobei das Modul größer als 275x10$^3$ kPa (40.000 lb/in$^2$) ist.

3. Batterie nach Anspruch 1, wobei das Modul etwa 600x10$^3$ kPa (87.000 lb/in$^2$) umfasst.

4. Batterie nach Anspruch 1, wobei das Modul 1.448x10$^3$ kPa (210.000 lb/in$^2$) umfasst.

5. Batterie nach Anspruch 1, wobei der Separator ferner einen Blasenpunkt von 220 kPa (32 PSI) umfasst.

6. Batterie nach Anspruch 1, wobei die Durchschlagfestigkeit des Separators größer oder gleich 6,8 N beträgt.

7. Batterie nach Anspruch 1, wobei die gedehnte PTFE-Membran ferner einen Füller umfasst.

8. Batterie nach Anspruch 1, wobei die gedehnte Polytetrafluorethylenmembran ein Längsmodul von 1.448x10$^3$ kPa (210.000 lb/in$^2$), einen Blasenpunkt von 220 kPa (32 PSI) und eine Durchschlagfestigkeit von etwa 4,9 N aufweist.

9. Batterie nach Anspruch 8, ferner eine Mehrzahl der Separatoren umfassend.


**Revendications**

1. Une batterie à enroulement comprenant une première électrode, une deuxième électrode, et un séparateur disposé entre lesdites premier et deuxième électrodes ; ledit séparateur comprenant une membrane en polytétrafluoroéthylène expansé présentant des pores définissant une surface interne ; ladite surface interne étant revêtue d'un agent en silice sol-gel de revêtement des pores ; ledit séparateur présentant un module longitudinal supérieur à 138x10$^3$kPa (20 000 lbs/in$^2$), une résistance au percement de 4,9 N ou supérieure, et un point de bulle d'au moins 152 kPa (22 psi) ; la membrane présentant une microstructure interne comprenant essentiellement une série de noeuds interconnectés par des fibrilles, lesdits noeuds étant généralement alignés en parallèle, extrêmement allongés, et avec un rapport d'élancement égal à 25/1, ou supérieur.

2. Une batterie selon la revendication 1, ledit module étant supérieur à 275x10$^3$kPa(40000 lb/in$^2$).

3. Une batterie selon la revendication 1, ledit module étant égal à environ 600x10$^3$kPa (87000 lb/in$^2$).

4. Une batterie selon la revendication 1, ledit module étant égal à 1448x10$^3$kPa (210000 lb/in$^2$).

5. Une batterie selon la revendication 1, le séparateur comprenant en outre un point de bulle de 220 kPa (32 psi).

6. Une batterie selon la revendication 1, ladite résistance au percement du séparateur étant égale à 6,8 N ou supérieure.

7. Une batterie selon la revendication 1, la membrane en PTFE expansé comprenant en outre une matière de remplissage.

8. Une batterie selon la revendication 1, la membrane en polytétrafluoroéthylène expansé ayant un module longitudinal égal à 1448x10$^3$kPa (210000 lb/in$^2$), un point de bulle de 220 kPa (32 psi), et une résistance au percement de 4,9 N environ.

9. Une batterie selon la revendication 8, comprenant en outre une série desdits séparateurs.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6242135 B1
- WO 9916138 A
- US 5814405 A
- JP 11051192 A
- US 921286 A
- US 5814 A
- US 405 A
- JP 8250101 A